# EUROPEAN PATENT SPECIFICATION

(11) **EP 3 193 007 B1**
(45) Date of publication and mention of the grant of the patent: **23.01.2019**
(21) Application number: 15814043.4
(22) Date of filing: 30.06.2015
(51) Int. Cl.: F01M 11/12, F03B 11/06, F03B 13/10, F16C 17/12, F16C 33/10, H02K 7/18, F03B 13/26, F03B 13/00, F16N 7/02

(54) **TIDAL CURRENT ENERGY ELECTRIC GENERATING APPARATUS**
GEZEITENSTRÖMUNGSENERGIESTROMERZEUGUNGSVORRICHTUNG
APPAREIL DE GÉNÉRATION D'ÉNERGIE ÉLECTRIQUE MARÉMOTRICE

(30) Priority: 30.06.2014 CN 201410309411
(43) Date of publication of application: 19.07.2017
(73) Proprietor: Zhejiang Zhoushan Lhd Energy Development Co., Ltd., Zhoushan, Zhejiang 316200 (CN)
(72) Inventor: LIN, Dong, Hangzhou Zhejiang 310009 (CN)
(74) Representative: Loo, Chi Ching
(86) International application number: PCT/CN2015/083000
(87) International publication number: WO 2016/000609

(56) References cited:
- CN-A- 102 359 599
- CN-A- 102 892 957
- CN-B- 102 359 599
- CN-U- 203 230 525
- CN-U- 203 230 527
- CN-U- 203 601 542
- US-A- 5 825 094
- US-A1- 2011 025 069
- US-A1- 2011 049 896
- US-B1- 7 215 036

## Description

### TECHNOLOGY FIELD

This invention relates to a generating device and, more particularly, to a tidal current energy generating device.

### BACKGROUND ART

Ocean energy (including tidal energy, tidal current energy, ocean wave energy, and ocean current energy) refers to mechanical energy generated by the flowing of sea water. As a kind of renewable energy, the ocean energy has great development prospect and value due to its abundant reserve and wide distribution. The primary use of the ocean energy is for power generation. The working principle of ocean energy power generation is similar to that of wind power generation. That is, the mechanical energy of the sea water is converted into electric energy by energy conversion devices. Specifically, at first, the sea water impacts hydro turbines, the hydro turbines convert the energy of the water flow into the mechanical energy of rotation, and then the hydro turbines drive power generators to generate power via mechanical drive systems, thereby finally converting the mechanical energy to the electric energy.

Nowadays, with the increasing shortage of energy and the increasing serious green house effect, energy is required to be low-carbon. Thus, clean energy, such as wind energy and the ocean energy, is the future direction of energy development. However, the power generating devices for the clean energy are still developing, and the utilization of the ocean energy is still in an initial stage, except the relatively mature wind energy utilization. No general-purpose and proven devices are available. The efficiency is relatively low, and it is difficult to realize large-scale devices.

Since the ocean environment is complicated and the water resistance is large, the installation of the conventional ocean energy power generator in the ocean has great difficulties and needs large costs. In addition, since the power generator contacts the sea water over a long period of time, under long corrosion and huge impaction of the sea water, the ocean energy power generator need to be regularly preserved or replaced after using a period of time. However, the preservation and replacement of the conventional ocean energy power generator in the ocean has great difficulties and needs large costs. The whole ocean energy power generator may be discarded even as damage of part components, which is one important reason causing large costs of the ocean energy power generator and is also a direct reason causing the conventional ocean energy power generator failing to realize large-scale and commercialized operation.

In particular, since a whole horizontal-axis hydraulic generator (including impellers and generators) is under water, the preservation and repair of the horizontal-axis hydraulic generator is more difficult and the cost is higher. Even though the power generating efficiency of the horizontal-axis hydraulic generator is better than that of a vertical-axis hydraulic generator, the horizontal-axis hydraulic generator still fails to be commercialized. However, those skilled in the ocean energy power generating field have overlooked the improvement of the modes of installing and repairing thereof.

In addition, Since the tidal current energy utilizes the tidal current in the ocean to generate electricity. The direction of the tidal current will change along with the flood and ebb tides. More important, the speed of the tidal current is not constant, in the stalling of the generating device, if a generator is chosen, a load thereby is ensured. However, as the speed of the tidal current is not constant, the generating capacity is not constant. Limited by the technology, the prior ocean energy generating device can only carry a generation load under a certain current speed to save cost, no matter the generator is a horizontal-axis hydraulic generator or a vertical-axis hydraulic generator. Once the current speed increases, the generation load is overload and he generator is more likely to collapse due to the overload. Therefore, to extent the working life of the generator, the conventional ocean energy generating device have to cut off the current completely to stop the generator once the tidal current exceeding a certain speed.

Another ocean energy generating device utilizing a horizontal-axis hydraulic generator learns from the design of the wind-driven generator, which adjusts the load of the generating device by variable pitch. When the current is large, the blade angle of attack is reduced by an adjusting device; when the current is small, the angle of attack is magnified by the adjusting device. However, this design has a major disadvantage. Differ from the environment conditions of the wind-driven generator, the horizontal-axis hydraulic generator is applied in the water, the resistance thereof is far more than the resistance against the wind-driven generator. In addition, as the whole rotating mechanism is under the water and the blade angle of the horizontal-axis hydraulic generator is the object to be adjusted, a close degree for installing between every blade assembly is needed to be designed accurately to achieve the rotating of the blade angle. If the connect is very tight, the friction force will be too large to adjust the angle of the upstream blade, and result in a failure effect of the adjusting device. In this condition the generating device cannot improve the efficiency when the current is too small, and cannot protect the generator when the current is too large. If the connect is very loose, the friction force is too small, although the adjusting is very easy, a terrible problem of losing of sealing will occur, therefore the current will inject in the inner of the impellor and destroy the whole impellor, the maintenance ratio is greatly enhanced, and the cost terribly increases.

On the other hand, a generating device utilizing ocean energy, especially tidal current energy, to generate electricity, a spindle thereof will bear a huge impact force in the radial direction. After using period of time, the seal ring between the spindle and a conventional bearing is likely to deform, the sealing of the bearings cannot be ensured. Since the problem of high sealing requirements cannot be solved, in prior ocean energy generating device, rolling bearings with the oil as lubricant is rejected, and water is chosen to be the lubricant. However, those skilled in the art have ignored one problem: water that can be used as lubricant must be pure water. In other words, as the current usually has sediments inside, if the outer water with impurities such as sediments flow into the bearing because of the elastic deformation of the sealing ring, it won't realize the lubrication action to the bearing, and will impact the proper functioning of the spindle in further, and at last it will influent the generating efficiency of the generating device.

One example of a tidal current energy generating device is disclosed in CN203601542U and GB2516989A.

Prior ocean energy generating device haven't solved the problem of how to improve the sealing of the bearings under the water. Therefore, the rotary apparatus designed to control the blade or the generator is very complex, and cannot be adjusted by one spindle.

### SUMMARY OF THE INVENTION

To overcome at least one of the disadvantages in prior art, this invention provides a tidal current energy generating device.

To achieve the purpose above, this invention provides a tidal current energy generating device, including an outer frame, at least two inner frames, at least two mounting shafts, a driving unit, at least four horizontal-axis hydraulic generators and at least six bearings. The at least two inner frames are separably disposed in the outer frame respectively. The at least two mounting shafts are rotatably disposed in the two inner frames respectively, the axial direction of the at least two mounting shafts is perpendicular to a horizontal plane. The driving unit is connected the at least two mounting shafts to drive the mounting shafts to rotate. Every two horizontal-axis hydraulic generators are fixed at one mounting shaft and are disposed in the same inner frame. The at least four horizontal-axis hydraulic generators change their directions with the rotating of the driving unit. Every three bearings are sleeved on one mounting shaft, the three bearings on one mounting shaft are disposed on the two sides and the center of the two horizontal-axis hydraulic generators respectively. The tidal current energy generating device further comprises an underwater shaft rotating protecting device, wherein the underwater shaft rotating protecting device comprises a lubricant storage tank, at least six seal rings, and a tube. Lubricant is stored in the lubricant storage tank, the lubricant storage tank is disposed above the water surface, and the lubricant is water without impurities. Every two seal rings corresponds to one bearing and are sleeved on the mounting shaft, a lubricant cavity is formed between every two seal rings and the corresponding bearing and the mounting shaft. One end of the tube is communicated with the lubricant storage tank, the other end is connected to the lubricant cavity.

In an embodiment of the invention, the tidal current energy generating device further may comprise at least four water flow deflectors, every water flow deflector may be disposed on every horizontal-axis hydraulic generator, the at least four water flow deflectors may be fixed at the outer frame or the inner frame, every water flow deflector may have two water guiding sections and one middle section, the middle section may be between the two water guiding sections, a cross section of one side of every water guiding section distal to the middle section may be rectangular, a cross section of one side of every water guiding section connected with the middle section may be circular, a cross section of the middle section may be circular, the cross sections may be perpendicular to the horizontal plane and may be perpendicular to the water flow direction, the area of the circular cross section may be smaller than that of the rectangular cross section.

In an embodiment of the invention, the underwater shaft rotating protecting device may further comprise a detection module, the detection module may be disposed at the lubricant storage tank to detect whether the lubricant is reduced or not.

In an embodiment of the invention, the bearing may be a sliding bearing, and every lubricant cavity may be formed by two seal rings, the bearings, and the mounting shaft.

In an embodiment of the invention, the bearing may be a rolling bearing, the underwater shaft rotating protecting device may further comprise at least three bearing houses, and each lubricant cavity may be formed by two seal rings, the bearings, the bearing houses, and the mounting shaft.

In an embodiment of the invention, the outer frame may have a plurality of fixed piles, and the outer frame may be fixed at the sea bottom through piling.

In an embodiment of the invention, the outer frame may have a plurality of water flow resistance reducing structures.

In conclusion, the tidal current energy generating device provided by the invention have separable inner frame and outer frame, which is convenient for the modular assembly and replacement of the generating device above the water surface, the costs of maintain and installing is greatly reduced, and it breaks through the disadvantage that commercialization and mass production are unachievable in prior ocean tidal current energy generating device. Further, by disposing at least two horizontal-axis hydraulic generators and at least three bearings on the mounting shaft, the "multipoint restriction" is achieved for the mounting shaft, which makes the scale of the tidal current energy generating device can be extended not only in the horizontal direction (the horizontal direction perpendicular to the water flow) but also in the vertical direction (the depth direction perpendicular to the water surface), the generated efficiency is greatly improvement, and the scale problem of the prior ocean energy devices is solved. By disposing mounting shaft, the load of the generator is adjusted by changing the direction of the whole horizontal-axis hydraulic generator but not only by changing the direction of the upstream angle of the blade alone, so that no matter how much the current speed is, the generator can always generate normally, and the generated power is improved. More important, by disposing a rotatable mounting shaft, no matter which direction the current flow towards, the blade of the horizontal-axis hydraulic generator can always turn towards the current to realize the maximum power. The method is especially suitable for generating by tidal energy.

By disposing the water flow deflector, the water is all concentrated to the horizontal-axis hydraulic generator, the impeller of the horizontal-axis hydraulic generator is stressed more force and rotates faster, the generated power is improved. The water flow deflector provided by the embodiments of the invention is rectangular in two ends and circle in the middle, it can achieve the diversion function no matter it is flood or ebb tides, and have a better diversion effect in such a specific structure.

Besides, the underwater shaft rotating protecting device provided by the invention can effectively protect the bearings from the outer impurities, especially the sediment in the water, By disposing the underwater shaft rotating protecting device, the tidal current energy generating device in the invention has bearings with extended working life, the maintenance frequency and maintenance cost are greatly reduced thereby, and the generating efficiency is not influenced at the same time. In addition, the bearing of the tidal current energy generating device provided by the invention can be a rolling bearing, which overcome the technical barrier that only sliding bearing with water as lubricant can be used for an underwater shafting in prior art.

Moreover, by setting the detection module, whether the sealing of the bearings is reduced or not can be known intuitively and timely, which effectively guides the maintenance personnel when and where to maintain, the promptness and reliability of the maintenance are improved. Further, since the shafts includes separable outer frame and inner frame, the underwater shaft rotating protecting device can be maintained or replaced conveniently and efficiently, the maintenance cost is greatly reduced.

In view of the figures, the technical solution of the invention is described in a manner sufficiently clear and complete.

### BRIEF DESCRIPTION OF THE DRAWINGS

FIG. 1 is a schematic diagram of a built-in module of a tidal current energy generating device provided by the first embodiment of the invention;
FIG. 2 is an enlarge schematic diagram of the circle mark V in FIG. 1;
FIG. 3 is a schematic diagram of a built-in module of a tidal current energy generating device provided by the second embodiment of the invention;
FIG. 4 is a top view of a tidal current energy generating device provided by the third embodiment of the invention;
FIG. 5 is a front view of the tidal current energy generating device provided by the third embodiment of the invention;
FIG. 6 is an enlarge schematic diagram of the circle mark U in FIG. 5;
FIG. 7 is a structural schematic diagram of a water flow deflector provided by the third embodiment of the invention; and
FIG. 8 is a front view of the water flow deflector provided by the third embodiment of the invention.

### DETAILED DESCRIPTION OF THE INVENTION

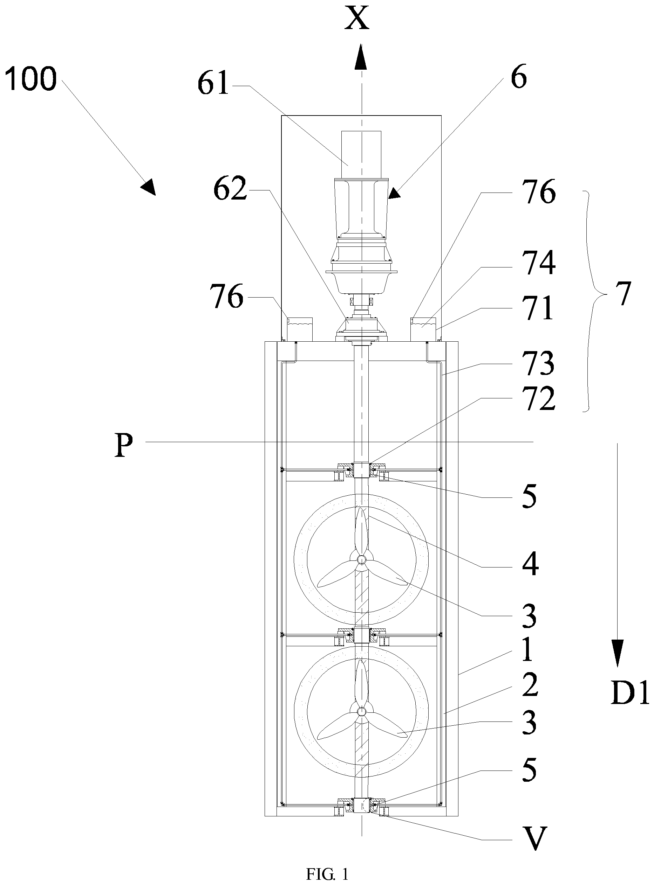

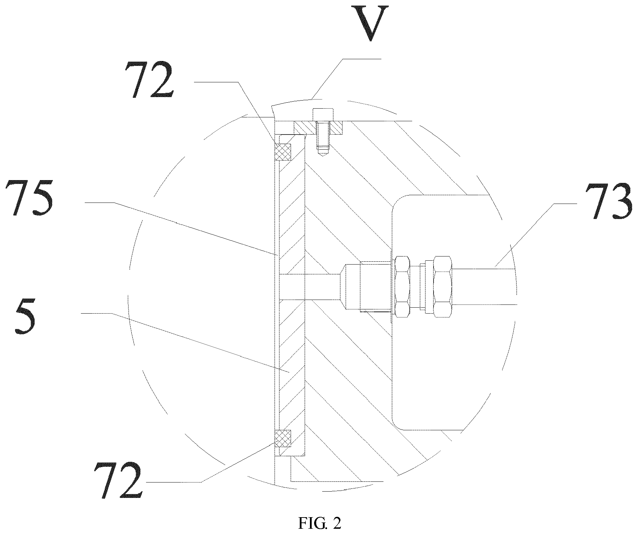

As shown in FIG. 1, the first embodiment of the invention provides a schematic diagram of a built-in module of the tidal current energy generating device. FIG. 2 is an enlarge schematic diagram of circle mark V in FIG. 1. FIG. 1 and FIG. 2 are noticed to be referenced with each other. The tidal current energy generating device provided by the embodiment includes an outer frame 1, at least two inner frames 2, at least four horizontal-axis hydraulic generators 3, at least two mounting shafts 4, at least six bearings 5 and a driving unit 6.

FIG. 1 only shows one built-in module 100 of the tidal current energy generating device, therefore it only displays one inner frame 2, two horizontal-axis hydraulic generators 3, one mounting shaft 4, three bearings 5 and the driving unit 6. The tidal current energy generating device of the invention includes at least two built-in modules 100.

At least two inner frames 2 are separably disposed in the outer frame 1. In the embodiment, a hook may be disposed in the inner frame 2 (not shown in the figure), an engaging slot may be disposed in the outer frame 1 (not shown in the figure), and the inner frame 2 is embedded into the outer frame 1 by the hook and the engaging slot interlocking together. However, the mounting mode of the inner frame 2 and the outer frame 1 in the invention is not limited,

One inner frame 2, at least two horizontal-axis hydraulic generators 3, at least one mounting shaft 4 and at least three bearings 5 form a built-in module 100. In practice, at least two horizontal-axis hydraulic generators 3, at least one mounting shaft 4 and at least three bearings 5 may be disposed in one inner frame 2, then at least two assembled frame 2 is disposed in the outer frame 1 to achieve the module installation of the tidal current energy generating device. More particularly, the built-in module 100 may be installed ashore, and then the built-in module 100 is hanged into the outer frame 1 in the ocean and is fixed to the outer frame 1, thereby greatly simplifying installing procedures, reducing installing time, and reducing installing difficulties in the ocean.

The number of the inner frames 2 in the invention is not limited. In practice, the number of the inner frames 2 may be as much as twelve. At least two inner frames are separably disposed in the outer frame respectively, which break through the disadvantage that mass production is unachievable in prior ocean tidal current energy generating device. By now the largest generating capacity of a single unit of the ocean tidal current energy generating device in the world is 1.2MV, however, the generating capacity of a single unit of the tidal current energy generating device in the invention is 5MV, which is much higher than the largest generating capacity of a single unit of the ocean tidal current energy generating device in prior art.

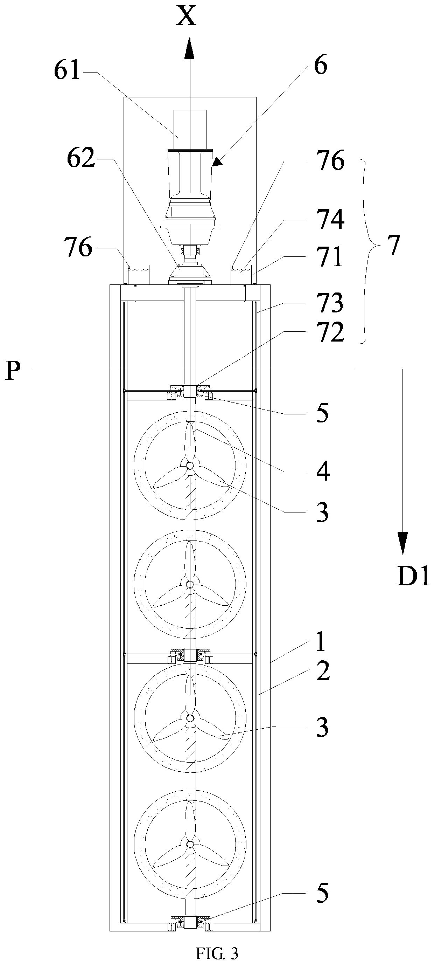

The horizontal-axis hydraulic generators 3 includes an impeller 31 and a generator 32 (as shown in FIG. 3). As the horizontal-axis hydraulic generators 3, the impeller and the generator are all under the water, if the horizontal-axis hydraulic generators 3 malfunctions, it will need to maintain in the sea for conventional ocean tidal current energy generating device, which is very difficult and quite expensive. However, for the tidal current energy generating device in the invention, the built-in module 100 can be directly extracted from the ocean for preservation or replacement, thereby realizing fast replacement and preservation of the ocean energy generating device, greatly reducing preserving costs, and allowing commercialization of the tidal current energy generating device to be realized.

At least two mounting shafts 4 are rotatably disposed in the two inner frames 2 respectively, an axial direction X of the mounting shafts 4 is perpendicular to a horizontal plane P. Every two horizontal-axis hydraulic generators 3 are fixed at one mounting shaft 4 and are disposed in the same inner frame 2. At least four horizontal-axis hydraulic generators 3 change their directions with the rotating of the mounting shafts 4. The driving unit 6 is connected to the mounting shaft 4 and drives the mounting shaft 4 to rotate. As the water flow directions of the flood and ebb tides to be reverse, no matter which direction the water flow comes towards, the impeller 31 of the horizontal-axis hydraulic generators 3 controlled by the rotating of the mounting shafts 4 is always towards the water flow to improve the using rate of the tidal current energy and the efficiency for generating.

In practice, when the water flow moves towards the tidal current energy generating device along the water flow direction shown in FIG. 3, the driving unit 6 doesn't work. At this point, the impeller 31 of the horizontal-axis hydraulic generators 3 faces the water flow. When the water flow moves towards the tidal current energy generating device along the opposite direction (top-down in FIG. 3), the driving unit 6 drives the mounting shaft 4 to rotate, and leads the impeller 31 of the horizontal-axis hydraulic generators 3 to be rotated 180 degrees, the impeller 31 is upturned from being downward to make sure that the impeller 31 of the horizontal-axis hydraulic generators 3 is always towards the water flow. This condition is especially pertinent for the generating utilized the tidal current energy, which ensures the maximum generating power.

Especially, the water flow directions of the flood and ebb tides are not exactly parallel, and are not necessarily perpendicular to an upstream face of the horizontal-axis hydraulic generators 3. No matter which direction the water flow comes towards the horizontal-axis hydraulic generators 3, the orientation of the horizontal-axis hydraulic generators 3 can be controlled by the mounting shafts 4 of the tidal current energy generating device in the invention, to maximize the utilization of the tidal current energy and improve the generated power.

In addition, when the actual water flow speed is larger than the nominal speed corresponding to the ultimate load of the horizontal-axis hydraulic generators 3, at this point only a certain rotation of the horizontal-axis hydraulic generators 3 controlled by the rotating of the mounting shaft 4 is needed to make it rotate off the water flow direction in a certain angle, so that the load of the horizontal-axis hydraulic generators 3 is effectively reduced. As the horizontal-axis hydraulic generators 3 won't be destroyed due to overload, the horizontal-axis hydraulic generators 3 will work well and output of the generators is continuant and steady, which overcomes the oversize speed of the conventional ocean tidal current energy generating device and the stop of the generator for fear of bearing, the variable pitch is not needed at the same time, so the load adjusting of the generator is more simple and effective. When the actual current speed is smaller than the nominal speed corresponding to the maximum load of the horizontal-axis hydraulic generators 3, horizontal-axis hydraulic generators 3 is controlled by the mounting shaft 4 to rotate towards the current direction (the upstream face of the horizontal-axis hydraulic generators 3 is perpendicular to the current direction), thus the current is made maximum use of to generate electricity, and the generated power is improved.

In the embodiment, the number of the inner frames 2 is equal to that of the mounting shafts 4, and the number of the horizontal-axis hydraulic generators 3 is the double of that of the mounting shafts, However, this invention is not limited thereto. In other embodiments, one built-in module 100 can have a plurality of mounting shafts 4 and each of the mounting shafts 4 can have more than two horizontal-axis hydraulic generators 3.

In the embodiment, the number of the driving units 6 is corresponding to the number of the mounting shafts 4 and is at least two. However, this invention is not limited thereto. In other embodiments, a gear or other transmission mechanism can be utilized to achieve the control of two mounting shafts 4 to one driving unit 6. Each of the driving units 6 includes a motor 61 and a transmission mechanism 62, the transmission mechanism 62 is connected on one end of the mounting shaft 4 (the upper end in FIG. 1), the motor 61 rotates by the transmission mechanism 62 driving the mounting shaft 4 to rotate. In the embodiment, the transmission mechanism 62 includes a driving gear and a driven gear engaged with the driving gear. The motor 61 drives the driving gear to rotate, which leads the driven gear to rotate. A gear hole of the driven gear is close fit to the upper end of the mounting shaft 4 to drive the mounting shaft 4 to rotate. However, this invention is not limited thereto. In other embodiments, the driving unit may include a motor and a reducer. As the prior motor generally rotates fast, the rotation speed can be greatly reduced by the reducer to control the rotation speed and rotation range of the mounting shaft 4 effectively and accurately.

Every three bearings 5 are sleeved on one mounting shaft 4, as shown in FIG. 1, the two bearings 5 on one mounting shaft 4 are disposed on the two sides of the two horizontal-axis hydraulic generators 3 respectively, and one bearing 5 is disposed between two horizontal-axis hydraulic generators 3.

A depth of the tidal current energy generating device in a depth direction D1 can be greatly expanded by disposing two or more horizontal-axis hydraulic generators 3 in the depth direction D1, to utilize the tidal current energy more efficiently and improve the generation power. At least three bearings 5 are disposed on one mounting shaft 4 to achieve the "multipoint restriction" for the mounting shaft 4. No matter how long the mounting shaft 4 is made, under the huge impact of the seawater, as the three bearings 5 share the stress at the same time, the mounting shaft 4 has at least three points to fix and support, which makes the length of the mounting shaft 4 is no more limited, more horizontal-axis hydraulic generators 3 can be installed in the depth direction D1, the scale of the tidal current energy is greatly expanded, the generation power is improved, and the technical problem in prior art that the tidal current energy generating device cannot be made deep in the sea is solved.

In the embodiment, the tidal current energy generating device further includes an underwater shaft rotating protecting device 7, every underwater shaft rotating protecting device 7 comprises a lubricant storage tank 71, at least six seal rings 72 and a tube 73. The lubricant 74 is stored in the lubricant storage tank 71, the lubricant storage tank 71 is disposed above water surface P. Every two seal rings 72 correspond to one bearing 5 and are sleeved on the mounting shaft 4, a lubricant cavity 75 is formed between every two seal rings 72 and the corresponding bearing 5 and the mounting shaft 4. One end of the tube 73 is communicated with the lubricant storage tank 71, the other end is connected to the lubricant cavity 75.

In the embodiment, for each built-in module 100, the number of the tubes 73 and the lubricant storage tanks 71 are both two, the two tubes 73 are connected with the two sides of the lubricant cavity 75 and the two lubricant storage tanks 71. The speed of filling the lubricant 74 is improved by increasing the number of the tubes 73. However, this invention is not limited thereto. In the embodiment, the tube 73 may be made by stainless steel.

In the first embodiment, the bearing 5 is a sliding bearing, every lubricant cavity 75 is formed by two seal rings 72, the bearings 5, and the mounting shaft 4. More particular, upper and lower surfaces of lubricant cavity 75 is formed by two seal rings 72, an inner surface of the lubricant cavity 75 is the outer surface of a shaft engaging slot part for installing the mounting shaft 4, the outer surface of the lubricant cavity 75 is the inner surface of the bearing 5. A cross section of the lubricant cavity 75 is annular, and the longitude section is a rectangular annular cylinder. The lubricant 74 is filled in the lubricant cavity 75 to form a lubricant film and reduce the friction thereby. In the first embodiment, according to the invention, the lubricant 74 is pure sea water without impurities such as sediment and so on.

As the impact force of the tidal current to the mounting shaft 4 is huge, the seal ring 72 is under a huge radial force for a long time and is easy to occur an elastic deformation, which leads to a failure sealing between the seal ring 72 and the mounting shaft 4, in other words, a gap is formed between the seal ring 72 and the mounting shaft 4. As the lubricant 74 is in the lubricant cavity 75 originally, when a gap exists in the lubricant cavity 75, the lubricant 74 may run off, meanwhile, the water outside will carry the impurities such as sediment to inflow from the gap. The following details how the underwater shaft rotating protecting device 7 for tidal current energy generating provided by the embodiment protect the mounting shaft 4 under the water surface.

As the lubricant storage tank 71 is above the water surface P, while the connection section of the horizontal-axis hydraulic generator 3 and the mounting shaft 4 is under the water surface P, there is a height difference between them. According to the fluid pressure formula, the pressure has direct relationship with the depth (the height from the pressure measuring point to the liquid level). Since the lubricant 74 in the lubricant cavity 75 is transported by the tube 73 communicated with the lubricant storage tank 71, with the same density, the pressure at the connection of the lubricant cavity 75 and the tube 73 must be larger than the outer pressure in the same depth. Meanwhile, as the liquid can transmit the pressure, the inner pressure on the sealing point of the seal ring 72 must be larger than the outer pressure on the sealing point of the seal ring 72. Therefore, the lubricant cavity 75 is always in a state of "micro-positive pressure".

In other words, even though the sealing between the bearing 5 and the mounting shaft 4 cannot be realized, namely, a gap exists between the seal ring 72 and the mounting shaft 4, the lubricant 74 will also continually flow from the lubricant storage tank 71 to the lubricant cavity 75 due to the pressure difference action, and then flows from the gap to the outside of the seal ring 72, and outer water with sediments won't flow into the lubricant cavity 75 from the gap, so that the protection for the mounting shaft 4 is truly achieved.

In practice, the tube 73 further includes a joint, multichannel configuration can be achieved by the joints, thus the lubricant cavity 75 in the three bearings 5 can share a master route of one tube 73 to connect with the common lubricant storage tank 71. However, this invention is not limited thereto.

In the embodiment, the underwater shaft rotating protecting device 7 for tidal current energy generating further includes a detection module 76, which is disposed at the lubricant storage tank 71 to detect whether the lubricant is reduced or not. In practice, the detection module 76 can be an infrared sensor, which detects whether the height of the lubricant 74 in the lubricant storage tank 71 is reduced or not to judge if the lubricant 74 decreases. The detection module 76 can also be a gravity sensor, which detects whether the weight of the lubricant 74 in the lubricant storage tank 71 is reduced or not to judge if the lubricant 74 changes. The decrease of the lubricant 74 represents the reduction of the sealing performance of the bearing 5, and remind maintenance personnel that the seal ring 72 is too aged or distortional and needs to be maintained or changed. By setting the detection module 76, maintenance personnel can see the states of the shafting intuitively and timely, especially the working condition of the seal ring 72, and maintain the tidal current energy generating device in time.

In practice, the underwater shaft rotating protecting device 7 may further include an alarm module (not shown in the figure), the alarm module is connected to the detection module 76. When the detection module 76 detects that the lubricant 74 decreases, the alarm module raises the alarm.

FIG. 3 shows the schematic diagram of a built-in module of the tidal current energy generating device provided by the second embodiment of the invention. In the second embodiment, structures and functions of the outer frame 1, the inner frames 2, the horizontal-axis hydraulic generator 3, the mounting shaft 4, the bearing 5 and the driving unit 6 are all the same as the first embodiment, and same elements are marked with same tabs, which needs not be repeated here. Only the difference is explained in the following.

In the embodiment, the four horizontal-axis hydraulic generators 3 are disposed on one mounting shaft 4. Two of the three bearings 5 are disposed on the upper and lower sides of the horizontal-axis hydraulic generator 3 on the mounting shaft 4, the other one is disposed between every two horizontal-axis hydraulic generators 3. In other words, two horizontal-axis hydraulic generators 3 is set as a group to ensure the bearing 5 is disposed between every group of the horizontal-axis hydraulic generators 3. A multipoint restriction and support of the mounting shaft 4 is achieved by such setting.

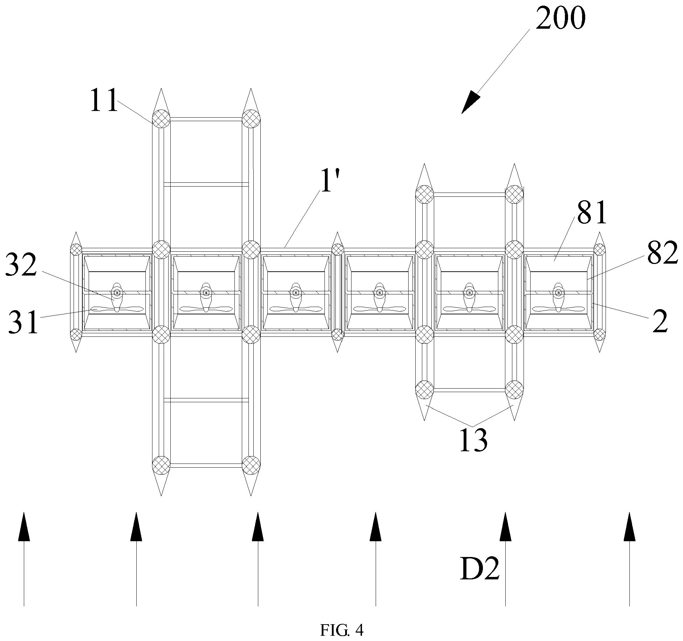

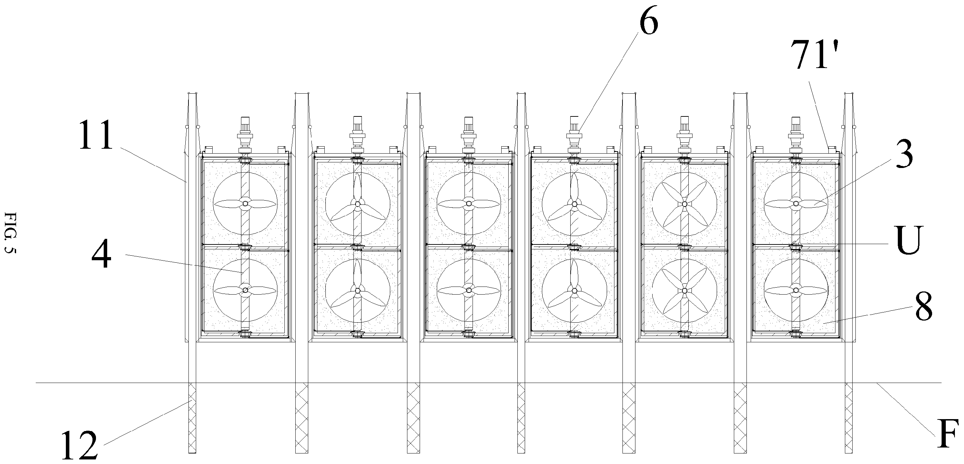

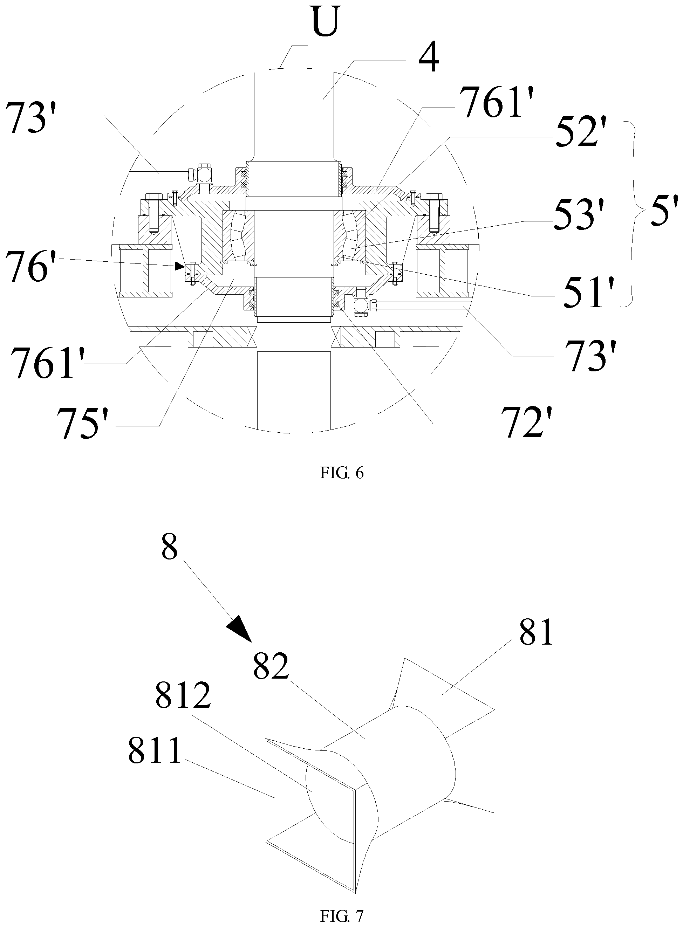

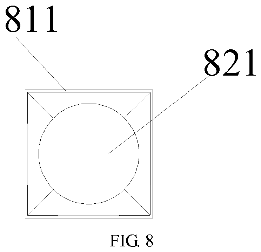

FIG. 4 is a top view of the tidal current energy generating device provided by the third embodiment of the invention. FIG. 5 is a front view of the tidal current energy generating device provided by the third embodiment of the invention. FIG. 6 is an enlarge schematic diagram of circle mark U in FIG. 5. FIG. 7 is a structural schematic diagram of the water flow deflector provided by the third embodiment of the invention. FIG. 8 is a front view of the water flow deflector provided by the third embodiment of the invention. FIG. 4 - FIG. 8 are noticed to be referenced with each other.

In the third embodiment, not part of the invention, structures and functions of the inner frames 2, the horizontal-axis hydraulic generator 3, the mounting shaft 4, the bearing 5 and the driving unit 6 are all the same as the first embodiment, and same elements are marked with same tabs, which needs not be repeated here. Only the difference is explained in the following.

An outer frame 1' can be made by welding steel material. In the embodiment, the outer frame 1' includes an outer sleeve 11 and a fixed pile 12. The fixed pipe 12 is formed by pouring of concrete in the outer sleeve 11. The outer frame 1' is fixed at the sea bottom F through piling.

In the embodiment, the outer frame 1' further comprises a plurality of reducing water flow resistance structures 13. The multiple reducing water flow resistance structures 13 are disposed in the upstream side of the multiple outer sleeves 11. By setting multiple reducing water flow resistance structures 13 to be disposed in the upstream side of multiple outer sleeves 11, the stressed area for water impact of the outer sleeves 11 (fixed pipes 12 are formed here later) is greatly reduced, and the stability of the fixed pipes 12 formed later is greatly increased. As shown in FIG. 4, the reducing water flow resistance structures 13 are disposed on the very top and the bottom of the outer frame 1'. In this embodiment, the multiple reducing water flow resistance structures 13 and the body of the outer frame 1' are integrally formed.

Take the fourth outer sleeve 11 in the second series from left in FIG. 4 as an example, as the outer sleeves 11 are arranged as one row parallel to the current direction, the flow impact force on the sleeves 11 in the downstream location will be greatly reduced after resisting by the sleeves 11 in the upstream location. Experiments show that if there's no reducing water flow resistance structure 13, when the current speed is constant, sum of the flow impact force on the four outer sleeves 11 is about 2.6 times of the flow impact force on one outer sleeve 11 exposed in the water. However, after disposing the reducing water flow resistance structure 13 in the outer frame 1', sum of the flow impact force on the four outer sleeves 11 is only 30% of the flow impact force on one outer sleeve 11 exposed in the water.

In the embodiment, the cross section of the reducing water flow resistance structures 13 is triangle. However, the shape and the construction of the reducing water flow resistance structures 13 are not limited in the invention. In other embodiments, the reducing water flow resistance structures can be streamline.

In the embodiment, a tidal current energy generating device 200 may include six built-in module, every built-in module has one inner frame 2, two corresponding horizontal-axis hydraulic generators 3, and three bearings 5'. However, this invention is not limited thereto. The number of the horizontal-axis hydraulic generators 3 in both horizontal (horizontal in FIG. 4, correspondingly a horizontal direction perpendicular to the current direction) and vertical (vertical in FIG. 4, correspondingly a depth direction perpendicular to the water level) can be increased according to the generated requirement of the tidal current energy generating device, so that the large scale production of the tidal current energy generating device 200 is realized

In the third embodiment, not part of the invention, the bearing 5' includes an inner ring 51', an outer ring 52' and a rolling element 53'. The inner ring 51' is matched with the mounting shaft 4 and rotates with the mounting shaft 4, the outer ring 52' is matched with a bearing house 76' as the support. The bearing 5' changes the sliding fraction between the mounting shaft and the bearing inside the sliding bearing into the rolling friction of the rolling element 53' between the inner ring 51' and the outer ring 52'.

In the embodiment, underwater shaft rotating protecting device 7' further comprises three bearing houses 76', a lubricant cavity 75' includes two seal rings 72', the bearing 5', the bearing house 76' and the mounting shaft 4, the rolling element 53' of the bearing 5' is inside the lubricant cavity 75'. More specially, the bearing house 76' in the invention further includes two end caps 761'. The end cap 761' can not only have an axial positioning function for the bearing 5', but also have the functions of preventing impurities and sealing with the seal ring 72'. A seal cavity is formed two end caps 761' up and down, the seal rings 72', the mounting shaft 4, and the bearing house 76', the bearing 5' is inside the cavity.

In the third embodiment, not part of the invention, the lubricant is lubricating oil. A tube 73' is connected to an upper end cap 761', the other tube 73' is connected to a lower end cap 761'. By these settings, the rolling element 53' of the bearing 5' is immersed in the lubricating oil.

Although the density of the lubricating oil is smaller than that of the water, and the pressure is proportional to the density and the depth, as the height difference of the lubricant storage tank 71' and the lubricant cavity 75' is relatively large, after calculation, in summary, the lubricant cavity 75' is still in a state of "micro-positive pressure". In other words, even if the lower seal rings 72' cannot realize the sealing, the lubricant will also continually flow from the lubricant storage tank 71' to the lubricant cavity 75' due to the pressure difference action, and then flows from the gap to the outside of the seal ring 72', and outer water with sediments won't flow into the lubricant cavity 75' from the gap, so that the protection for the mounting shaft 4 is truly achieved.

In the embodiment, every tidal current energy generating device 200 includes at least four water flow deflectors 8, every water flow deflector 8 is disposed corresponding to every horizontal-axis hydraulic generator 3. Every water flow deflector 8 has two water guiding sections 81 and one middle section 82. The middle section 82 is located between the two water guiding sections 81, a cross section 811 of one side of every water guiding section 81 far away from the middle section 82 is rectangular, a cross section 812 of one side of every water guiding section 81 connected with the middle section 82 is circular, a cross section 821 of the middle section 82 is circular, the cross sections are perpendicular to a horizontal plane and are perpendicular to a water flow direction D2, the area of the circular cross sections 812 and 821 is smaller than that of the rectangular cross section.

In particular, the middle section 82 is a cylindrical tube, one end of every water guiding section 81 is rectangular and is transited into the circular three-dimensional structure in the other end. The area of the circle cross section 812 of the water guiding section 81 is approximately equal to that of the circle cross section 821 of the middle section 82. The area of the circle cross section 812 of the water guiding section 81 is smaller than that of the rectangular cross section 811. In practice, the horizontal-axis hydraulic generator 3 is just in the cylindrical middle section 82.

By setting one end of water guiding sections 81 as a rectangle, seamless connection to the connecting end faces of the inner frame 2 can be realized. The prior tidal current generating device utilizes a water flow deflector that all the cross sections thereof are circle in the upstream face. As the prior shafts are all rectangular, a gap will exist between the circle and the rectangle during installing. If nothing resists the gap, when the current impacting the hydraulic generator, quite a number of the current will flow into the hydraulic generator from the gap, even flow to the back of the impeller blade, which greatly induces the generated power. If the gap is resisted by a panel, the current will directly flow into the panel, a huge stress is generated thereby, and the structure of the whole frame is likely to be destroyed. Especially, after resisted by the panel, the current direction will change, or even the current flows everywhere, which terribly reduces the use ratio of the tidal current energy, and the generated power is reduced in further.

By transiting from the rectangle to the circle, the water channel is narrowed, the current is concentrated towards the horizontal-axis hydraulic generator 3, so that the blades 31 of the horizontal-axis hydraulic generator 3 stress more and rotate faster, thus the generating efficiency is increased. Especially, both sides of the water flow deflector 8 are rectangular, but not only one side of it is rectangular, in this way the water flow deflector 8 can achieve the diversion function no matter it is flood or ebb tides.

The water flow deflector 8 can be fixed to the outer frame 1' or the inner frame 2. In the embodiment, the water flow deflectors 8 are all fixed to the inner frame 2. However, this invention is not limited thereto. In practice, the water flow deflector 8 can be installed separably, its middle section 82 can be fixed to the inner frame 2, and the two water guiding sections 81 is fixed to the outer frame 1'. In installing, the middle section 82 can be fixed above the water surface while assembling the built-in module, and the water guiding sections 81 can be directly fixed to the outer frame 1', then when the built-in module is turned in the outer frame 1', the installing of the water flow deflector 8 is finished.

In conclusion, the tidal current energy generating device provided by the invention have separable inner frame and outer frame, which is convenient for the modular assembly and replacement of the generating device above the water surface, the costs of maintain and installing is greatly reduced, and it breaks through the disadvantage that commercialization and mass production are unachievable in prior ocean tidal current energy generating device. Further, by disposing at least two horizontal-axis hydraulic generators and at least three bearings on the mounting shaft, the " multipoint restriction" is achieved for the mounting shaft, which makes the scale of the tidal current energy generating device can be extended not only in the horizontal direction (the horizontal direction perpendicular to the water flow) but also in the vertical direction (the depth direction perpendicular to the water surface), the generated efficiency is greatly improvement, and the scale problem of the prior ocean energy devices is solved. By disposing mounting shaft, the load of the generator is adjusted by changing the direction of the whole horizontal-axis hydraulic generator but not only by changing the direction of the upstream angle of the blade alone, so that no matter how much the current speed is, the generator can always generate normally, and the generated power is improved. More important, by disposing a rotatable mounting shaft, no matter which direction the current flow towards, the blade of the horizontal-axis hydraulic generator can always turn towards the current to realize the maximum power. The method is especially suitable for generating by tidal energy.

In addition, the underwater shaft rotating protecting device provided by the invention can effectively protect the bearings from the outer impurities, especially the sediment in the water, by disposing the underwater shaft rotating protecting device, the tidal current energy generating device in the invention has bearings with extended working life, the maintenance frequency and maintenance cost are greatly reduced thereby, and the generating efficiency is not influenced at the same time. In addition, the bearing of the tidal current energy generating device provided by the invention can be a rolling bearing, which overcome the technical barrier that only sliding bearing with water as lubricant can be used for an underwater shafting in prior art.

Moreover, by setting the detection module, whether the sealing of the bearings is reduced or not can be known intuitively and timely, which effectively guides the maintenance personnel when and where to maintain, the promptness and reliability of the maintenance are improved. Further, since the shafts includes separable outer frame and inner frame, the underwater shaft rotating protecting device can be maintained or replaced conveniently and efficiently, the maintenance cost is greatly reduced.

By disposing the water flow deflector, the water is all concentrated to the horizontal-axis hydraulic generator, the impeller of the horizontal-axis hydraulic generator is stressed more force and rotates faster, the generated power is improved. The water flow deflector provided by the embodiments of the invention is rectangular in two ends and circle in the middle, it can achieve the diversion function no matter it is flood or ebb tides, and have a better diversion effect in such a specific structure.

Although the invention is described in considerable detail with reference to certain preferred embodiments thereof, the disclosure is not for limiting the scope of the invention. Persons having ordinary skill in the art may make various modifications and changes without departing from the scope of the invention. Therefore, the scope of this invention is subject to the scope of the claims.

## Claims

1. A tidal current energy generating device (200), comprising:
an outer frame (1; 1');
at least two inner frames (2), separably disposed in the outer frame (2);
at least two mounting shafts (4), rotatably disposed in the two inner frames (2), respectively, an axial direction of the at least two mounting shafts (4) being perpendicular to a horizontal plane;
a driving unit (6), connected with the at least two mounting shafts (4) to drive the mounting shafts (4) to rotate.
at least four horizontal-axis hydraulic generators (3), every two horizontal-axis hydraulic generators (3) fixed at one mounting shaft (4) and disposed in the same inner frame (2), and the at least four horizontal-axis hydraulic generators (3) changing directions with the rotating of the driving unit (6); and
at least six bearings (5; 5'), every three bearings (5; 5') sleeved on one mounting shaft (4), and the three bearings (5; 5') on one mounting shaft (4) disposed on the two sides of the two horizontal-axis hydraulic generators (3) and between the two horizontal-axis hydraulic generators (3), respectively; and
**characterized by** an underwater shaft rotating protecting device (7), wherein the underwater shaft rotating protecting device (7; 7') comprises:
a lubricant storage tank (71), wherein a lubricant (74) is stored and the lubricant storage tank (71) is disposed above water surface, and the lubricant (74) is sea water without impurities;
at least six seal rings (72; 72'), every two seal rings (72; 72') corresponding to one bearing (5; 5') and sleeved on the mounting shaft (4), and a lubricant cavity (75; 75') being formed between every two seal rings (72; 72') and the corresponding bearing (5) and the mounting shaft (4); and
a tube (73), one end of the tube (73) is communicated with the lubricant storage tank (71), and the other end communicated with the lubricant cavity (75; 75').

2. The tidal current energy generating device (200) according to claim 1, further comprising at least four water flow deflectors (8), wherein every water flow deflector (8) is disposed corresponding to every horizontal-axis hydraulic generator (3), the at least four water flow deflectors (8) are fixed at the outer frame (1; 1') or the inner frame (2), every water flow deflector (8) has two water guiding sections (81) and one middle section (82), the middle section (82) is located between the two water guiding sections (81), a cross section of one side of every water guiding section (81) distal to the middle section (82) is rectangular, a cross section of one side of every water guiding section (81) connected with the middle section (82) is circular, a cross section of the middle section (82) is circular, the cross sections are perpendicular to the horizontal plane and are perpendicular to a water flow direction, and the area of the circular cross section is smaller than that of the rectangular cross section.

3. The tidal current energy generating device (200) according to claim 1, wherein the underwater shaft rotating protecting device (7) further comprises a detection module (76), disposed at the lubricant storage tank (71) to detect whether the lubricant (74) is reduced or not.

4. The tidal current energy generating device (200) according to claim 1, wherein the bearing (5) is a sliding bearing, and every lubricant cavity (75) is formed by two seal rings (72), the bearings (5), and the mounting shaft (4).

5. The tidal current energy generating device (200) according to claim 1, wherein the bearing (5') is a rolling bearing, the underwater shaft rotating protecting device (7') further comprises at least three bearing houses (76'), and each lubricant cavity (75') is formed by two seal rings (72'), the bearings (5'), the bearing house (76'), and the mounting shaft (4).

6. The tidal current energy generating device (200) according to claim 1, wherein the outer frame (1; 1') has a plurality of fixed piles (12), and the outer frame (1; 1') is fixed at the sea bottom through piling.

7. The tidal current energy generating device (200) according to claim 1, wherein the outer frame has a plurality of water flow resistance reducing structures (13).

## Patentansprüche

1. Gezeitenströmungsenergieerzeugungsvorrichtung (200), umfassend:
einen äußeren Rahmen (1; 1')
mindestens zwei innere Rahmen (2), die ablösbar im äußeren Rahmen (2) angeordnet sind;
mindestens zwei Montagewellen (4), die jeweils drehbar in den zwei inneren Rahmen (2) angeordnet sind, wobei eine axiale Richtung der mindestens zwei Montagewellen (4) senkrecht ist zu einer horizontalen Ebene;
eine Antriebseinheit (6), die mit den mindestens zwei Montagewellen (4) verbunden ist, um die Montagewellen (4) anzutreiben, damit sich diese drehen,
mindestens vier hydraulische Horizontalachsen-Generatoren (3), wobei jeweils zwei hydraulische Horizontalachsen-Generatoren (3) an einer Montagewelle (4) befestigt sind und im selben inneren Rahmen (2) angeordnet sind, und die mindestens vier hydraulischen Horizontalachsen-Generatoren (3) ihre Richtungen mit der Drehung der Antriebseinheit (6) ändern; und
mindestens sechs Lager (5; 5'), wobei jeweils drei Lager (5; 5') als Hülsen an je einer Montagewelle (4) angebracht sind, und die drei Lager (5; 5') auf je einer Montagewelle (4) auf den zwei Seiten der zwei hydraulischen Horizontalachsen-Generatoren (3) und zwischen den zwei hydraulischen Horizontalachsen-Generatoren (3) angeordnet sind; und
**gekennzeichnet durch** eine Unterwasser-Drehwellenschutzvorrichtung (7), wobei die Unterwasser-Drehwellenschutzvorrichtung (7; 7') umfasst:
einen Gleitmittelvorratstank (71), in dem ein Gleitmittel (74) vorrätig gehalten wird, und wobei der Gleitmittelvorratstank (71) oberhalb der Wasseroberfläche angeordnet ist und das Gleitmittel (74) Meerwasser ohne Verunreinigungen ist;
mindestens sechs Dichtungsringe (72; 72'), wobei jeweils zwei Dichtungsringe (72; 72') je einem Lager (5; 5') entsprechen und als Hülse auf der Montagewelle (4) angebracht sind, und ein Gleitmittelhohlraum (75; 75') zwischen jeweils zwei Dichtungsringen (72; 72') und dem entsprechenden Lager (5) und der Montagewelle (4) ausgebildet ist; und
ein Rohr (73), wobei ein Ende des Rohrs (73) mit dem Gleitmittelvorratstank (71) in Verbindung steht und das andere Ende mit dem Gleitmittelhohlraum (75; 75') in Verbindung steht.

2. Gezeitenströmungsenergieerzeugungsvorrichtung (200) nach Anspruch 1, ferner mindestens vier Wasserströmungsabweiser (8) umfassend, wobei jeder Wasserströmungsabweiser (8) entsprechend je einem hydraulischen Horizontalachsen-Generator (3) angeordnet ist, wobei die mindestens vier Wasserströmungsabweiser (8) am äußeren Rahmen (1; 1') oder am inneren Rahmen (2) befestigt sind, jeder Wasserströmungsabweiser (8) zwei Wasserführungsabschnitte (81) und einen mittleren Abschnitt (82) aufweist, der mittlere Abschnitt (82) zwischen den zwei Wasserführungsabschnitten (81) angeordnet ist, ein Querschnitt einer Seite von jedem Wasserführungsabschnitt (81), die distal ist zum mittleren Abschnitt (82) rechteckig ist, ein Querschnitt einer Seite von jedem Wasserführungsabschnitt (81), die mit dem mittleren Abschnitt (82) verbunden ist, kreisförmig ist, ein Querschnitt des mittleren Abschnitts (82) kreisförmig ist, die Querschnitte senkrecht sind zur horizontalen Ebene und senkrecht sind zu einer Wasserströmungsrichtung, und die Fläche des kreisförmigen Querschnitts kleiner ist als die des rechteckigen Querschnitts.

3. Gezeitenströmungsenergieerzeugungsvorrichtung (200) nach Anspruch 1, wobei die Unterwasser-Drehwellenschutzvorrichtung (7) ferner ein Erfassungsmodul (76) umfasst, das am Gleitmittelvorratstank (71) angeordnet ist, um zu erfassen, ob das Gleitmittel (74) weniger geworden ist oder nicht.

4. Gezeitenströmungsenergieerzeugungsvorrichtung (200) nach Anspruch 1, wobei das Lager (5) ein Gleitlager ist und jeder Gleitmittelhohlraum (75) von zwei Dichtungsringen (72), den Lagern (5) und der Montagewelle (4) gebildet wird.

5. Gezeitenströmungsenergieerzeugungsvorrichtung (200) nach Anspruch 1, wobei das Lager (5') ein Wälzlager ist, die Unterwasser-Drehwellenschutzvorrichtung (7') ferner mindestens drei Lagergehäuse (76') umfasst und jeder Gleitmittelhohlraum (75') von zwei Dichtungsringen (72'), den Lagern (5'), dem Lagergehäuse (76') und der Montagewelle (4) gebildet wird.

6. Gezeitenströmungsenergieerzeugungsvorrichtung (200) nach Anspruch 1, wobei der äußere Rahmen (1; 1') mehrere feststehende Pfähle (12) aufweist und der äußere Rahmen (1; 1') mit den Pfählen in den Meeresboden gerammt ist.

7. Gezeitenströmungsenergieerzeugungsvorrichtung (200) nach Anspruch 1, wobei der äußere Rahmen mehrere Strukturen (13) aufweist, die einen Wasserströmungswiderstand verringern.

## Revendications

1. Dispositif de génération d'énergie marémotrice (200), comprenant :
un bâti externe (1 ; 1') ;
au moins deux bâtis internes (2) disposés de manière séparable dans le bâti externe (2) ;
au moins deux arbres de montage (4) disposés de manière rotative dans les deux bâtis internes (2), respectivement, une direction axiale des au moins deux arbres de montage (4) étant perpendiculaire à un plan horizontal ;
une unité d'actionnement (6) reliée aux au moins deux arbres de montage (4) pour entraîner les arbres de montage (4) en rotation,
au moins quatre générateurs hydrauliques à axe horizontal (3), un générateur hydraulique à axe horizontal (3) sur deux étant fixé sur un arbre de montage (4) et disposé dans le même bâti interne (2), et les au moins quatre générateurs hydrauliques à axe horizontal (3) changeant de direction avec la rotation de l'unité d'actionnement (6) ; et
au moins six paliers (5 ; 5'), un palier (5 ; 5') sur trois étant manchonné sur un arbre de montage (4), et les trois paliers (5 ; 5') sur un arbre de montage (4) étant disposés sur les deux côtés des deux générateurs hydrauliques à axe horizontal (3) et entre les deux générateurs hydrauliques à axe horizontal (3), respectivement ; et
**caractérisé par** un dispositif de protection de la rotation de l'arbre sous-marin (7), le dispositif de protection de la rotation de l'arbre sous-marin (7 ; 7') comprenant :
un réservoir de stockage de lubrifiant (71) dans lequel un lubrifiant (74) est stocké, le réservoir de stockage de lubrifiant (71) étant disposé au-dessus de la surface de l'eau, et le lubrifiant (74) étant de l'eau de mer exempte d'impuretés ;
au moins six bagues d'étanchéité (72 ; 72'), une bague d'étanchéité (72 ; 72') sur deux correspondant à un palier (5 ; 5') et étant manchonnée sur l'arbre de montage (4), une cavité à lubrifiant (75 ; 75') étant formée entre une bague d'étanchéité (72 ; 72') sur deux et le palier (5) correspondant et l'arbre de montage (4) ; et
un tube (73), une extrémité du tube (73) étant en communication avec le réservoir de stockage de lubrifiant (71) et l'autre extrémité étant en communication avec la cavité à lubrifiant (75 ; 75').

2. Dispositif de génération d'énergie marémotrice (200) selon la revendication 1, comprenant en outre au moins quatre déflecteurs d'écoulement d'eau (8), chaque déflecteur d'écoulement d'eau (8) étant disposé de manière à correspondre à chaque générateur hydraulique à axe horizontal (3), les au moins quatre déflecteurs d'écoulement d'eau (8) étant fixés au niveau du bâti externe (1 ; 1') ou du bâti interne (2), chaque déflecteur d'écoulement d'eau (8) ayant deux sections de guidage d'eau (81) et une section médiane (82), la section médiane (82) étant située entre les deux sections de guidage d'eau (81), une section transversale d'un côté de chaque section de guidage d'eau (81) distale par rapport à la section médiane (82) étant rectangulaire, une section transversale d'un côté de chaque section de guidage d'eau (81) reliée à la section médiane (82) étant circulaire, une section transversale de la section médiane (82) étant circulaire, les sections transversales étant perpendiculaires au plan horizontal et étant perpendiculaires à un sens d'écoulement de l'eau, et la surface de la section transversale circulaire étant inférieure à celle de la section transversale rectangulaire.

3. Dispositif de génération d'énergie marémotrice (200) selon la revendication 1, dans lequel le dispositif de protection de la rotation de l'arbre sous-marin (7) comprend en outre un module de détection (76) disposé au niveau du réservoir de stockage de lubrifiant (71) pour détecter si le lubrifiant (74) est réduit ou non.

4. Dispositif de génération d'énergie marémotrice (200) selon la revendication 1, dans lequel le palier (5) est un palier à glissement, et chaque cavité à lubrifiant (75) est formée par deux bagues d'étanchéité (72), les paliers (5) et l'arbre de montage (4).

5. Dispositif de génération d'énergie marémotrice (200) selon la revendication 1, dans lequel le palier (5') est un palier à roulement, le dispositif de protection de la rotation de l'arbre sous-marin (7') comprend en outre au moins trois logements de paliers (76'), et chaque cavité à lubrifiant (75') est formée par deux bagues d'étanchéité (72'), les paliers (5'), le logement de palier (76') et l'arbre de montage (4).

6. Dispositif de génération d'énergie marémotrice (200) selon la revendication 1, dans lequel le bâti externe (1 ; 1') comporte une pluralité de piles fixes (12) et le bâti externe (1 ; 1') est fixé au niveau du fond marin par battage.

7. Dispositif de génération d'énergie marémotrice (200) selon la revendication 1, dans lequel le bâti externe comporte une pluralité de structures réduisant la résistance à l'écoulement de l'eau (13).
